# EUROPEAN PATENT APPLICATION

(11) **EP 1 143 442 A2**
(43) Date of publication of application: **10.10.2001**
(21) Application number: 01114729.5
(22) Date of filing: 06.05.1999
(51) Int. Cl.: G11B 20/12, G11B 27/32, H04N 5/926, H04N 9/804, H04N 5/85, G11B 27/034, G11B 27/10

(54) **Optical disk, optical disk recording/reproducing apparatus and method thereof**

(30) Priority: 27.06.1998 KR 9824554
(62) Divisional of application: 99303536.9
(71) Applicant: SAMSUNG ELECTRONICS CO., LTD., Suwon-City, Kyungki-do (KR)
(72) Inventor: Park, Pan-gie, Suwon-city, Kyungki-do (KR); Oh, Young-nam, Sungnam-city, Kyungki-do (KR); Chung, Tae-yun, Gwachun-city, Kyungki-do (KR); Kang, Jung-suk, Songpa-gu, Seoul (KR); Moon, Seong-jin, Seoul (KR)
(74) Representative: Chugg, David John

(57) **Abstract**

An apparatus and method for recording and reproducing audio and video data on a rewritable optical disk in real time, is provided. A disk recording medium, allowing a user to access recorded data at predetermined intervals, includes cells comprised of part of predetermined data and set as reproduction and recording units, and information on position from the start of the cells to a specific position. This method includes the step of constituting a cell of part of the recorded audio and video data, constituting a program of the one or more cells, constituting a part of title (PTT) of a specific portion of the recorded audio and video data, and then recording the information on the cell, the program, and the PTT on the disk.

## Description

The present invention relates to an optical disk recording/reproducing apparatus and a method thereof, and more particularly, to an apparatus and method of recording/reproducing audio and video data on a rerecordable optical disk in real time.

A typical digital video disc (DVD) read only memory (ROM) video player reproduces audio and video data using a disk.

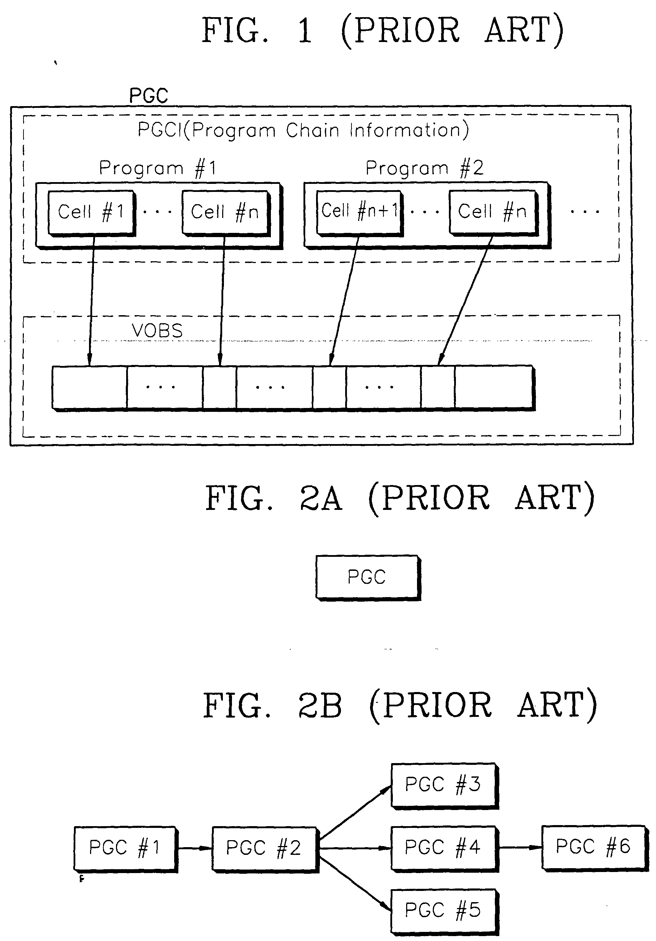

A DVD ROM video format, as shown in Figure 1, is comprised of program chains (PGC), programs, and cells for logically dealing with data, and video objects (VOBS) in which audio and video data has been recorded.

If a movie has been recorded into first and last volumes, the entire movie is represented by a PGC, and the first and second volumes each can be represented by programs. Also, each of the programs can be divided into several small units, cells, in consideration of a random access, and data included in each cell exists in a partial area of VOBS.

A manufacturer, who manufactures data in the DVD ROM video format, constitutes original audio and video data items in forms of the PGC, the program, and the cell and provides the result to users.

As shown in Figure 1, program chain information (PGCI) is the connection information of several programs, and VOBS is a video object (VOB) collection in which actually-compressed audio and video data items have been recorded. One or more programs exist in one PGCI, and one program is comprised of a collection of one or more cell units. Each cell is a sort of recording/reproducing unit, and audio and video data exists in the VOBS. The PGCI has only program information such as the position of audio and video data or the recording/reproducing time existing in the VOBS. The VOB in the VOBS is subdivided into video object units (VOBU) which are used as random access units of a disk recording/reproducing apparatus. In general, the VOBU is constituted of motion picture experts group (MPEG) video data and audio data multiplexed in units of a sector.

The relationship between the title and the PGC in a DVD-ROM video will now be described. For example, a title can correspond to an entire movie, and is the largest unit of a data structure from a user's standpoint. When a manufacturer, manufacturing the DVD-ROM video disk with such a title, forms a data structure, one PGC may comprise one title as shown in Figure 2A, or several PGCs comprise one title as shown in Figure 2B according to the manufacturers intention. When the title constituted as shown in Figure 2B is reproduced in sequence, PGC#1 and PGC#2 are reproduced, one of PGC#3, PGC#4, and PGC#5 is selected and reproduced, and finally PGC#6 is reproduced. Here, PGC#3, PGC#4, and PGC#5 may have different contents, or may have different editions of the same content.

From a user's standpoint, the title has such a large concept that it can be divided into several chapters or parts of title (PTT) to allow a scene to rapidly jump to the next scene. In the case of a music CD, an entire collection of songs recorded in the CD correspond to one title, and each of the songs corresponds to the chapter or PTT. The programs and cells are reproduction and recording units determined by a user according to the properties of data. In the PGC corresponding to a title concept, the PTT is divided by the content of data and logically provided to the user.

The PTT also has its own information in the form of a PTT search pointer table among areas of information on the title.

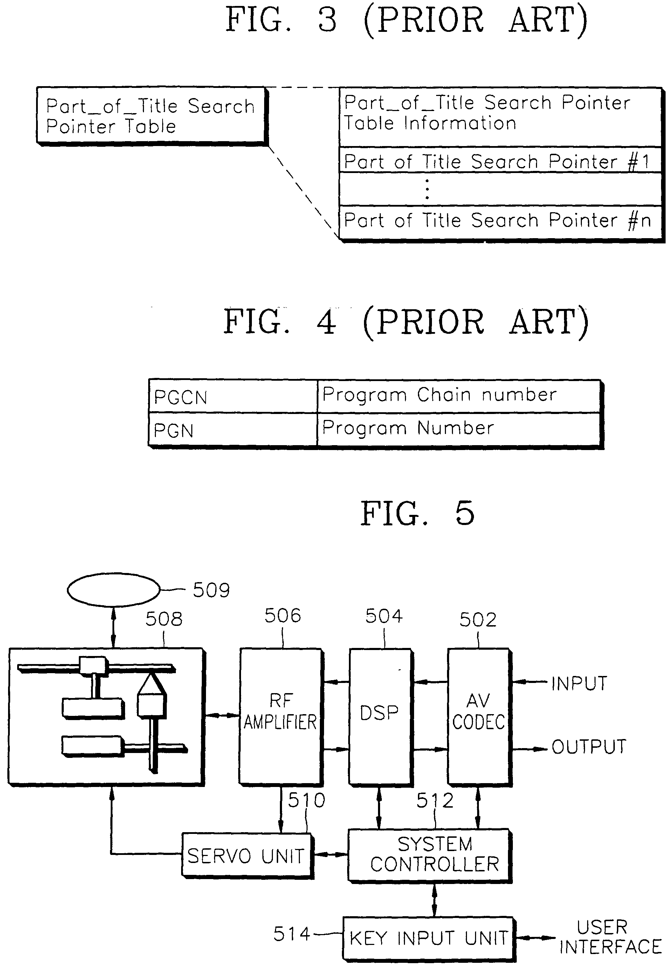

A PTT search pointer table shown in Figure 3 is comprised of a PTT search pointer table information area, and PTT search pointers existing in a title. Here, the PTT search pointer table information area has information on the number of PTT pointers. Each of the PTT search pointers indicates a point of time when a PTT starts, and is comprised of a program chain number (PGCN) and a program number (PGN). Here, the PGCN represents the number of a program chain (PGC) to which the PTT pertains, and the PGN represents the number of a program in the PGC. A lot of PTT information is moved from a current position, where PTT information is being reproduced, to the next PTT, and then is reproduced, when a user has received the next PTT command via an external input device.

In the DVD-ROM video format, the programs constituting a PGC as shown in Figure 1 are consistent with the content actually recorded on a disk. That is, an area in a specific range is constituted of programs through a special manufacturing process on the basis of the contents recorded on the disk, and a specific program can be defined to be selected from the several programs and used as PTT. Also, the program units are divided in accordance with the contents of recorded data, so that the PTT information can use the program units. However, in an apparatus for recording/reproducing audio and video data in real time, units such as programs, cells, etc. cannot be constituted in accordance with the contents of data recorded on a disk, unless special information on the contents recorded data is provided in real time. Therefore, if the PTT is constituted according to the prior art, PTT information is meaningless to users.

With a view to solve or reduce the above problem, it is an aim of preferred embodiments of the present invention to provide an optical disk recording and reproducing method of recording and reproducing part of title (PTT) information depending on real-time recorded data contents on a rewritable disk.

It is another aim of embodiments of the present invention to provide an optical disk recording and reproducing apparatus for recording and reproducing part of title (PTT) information depending on real-time recorded data contents on a rewritable optical disk.

It is still another aim of the present invention to provide an optical disk recording medium by which a user can randomly access part of title (PTT) information within specific units such as cells or programs for reproduction and recording on a rewritable disk.

According to a first aspect of the invention, there is provided a disk recording medium, comprising: a cell including data, the cell being set as a reproduction and recording unit; and information representing a position from a start of the cell to a specific position.

The disk recording medium further comprise a plurality of cells including data, the plurality of cells being set as reproduction and recording units, wherein the information represents a position from a start of the respective cells to the specific position.

Preferably, the reproduction and recording unit is randomly accessible.

Preferably, the position from the start of the cell to the specific position is defined as a reproduction time.

Preferably, the reproduction time is indicated in a form of hour/minute/second frame based on video data.

Preferably, the information representing the position from the start of the cell to the specific position comprises: a part of title search pointer table which includes a value indicating a number of part of title search pointers, and each part of title search pointer including a cell number of the cell in a program chain; and a position relative from the start of the cell to the specific position.

According to a second aspect of the invvention, there is provided a recording medium, comprising: audio and/or video data; a cell for logically dealing with the audio and/or video data; and part of title information indicating a specific area in the cell.

The recording medium may further comprise: a program chain comprising a program, wherein the program comprises the cell.

Preferably, the cell comprises a start and an end of a recording command input by a user.

The recording medium may further comprise: a program chain comprising at least one program, wherein each program comprises a plurality of cells including the cell.

Preferably, each cell comprises a start and an end of corresponding recording command inputs by a user.

Preferably, each program comprises ones of the cells recorded on a same date.

Preferably, the part of title information comprises: information representing a position from a start of the cell to a specific position.

The information representing the position from the start of the cell to the specific position may comprise: a part of title search pointer including a cell number of the cell in a program chain; and a position relative from the start of the cell to the specific position.

The part of title information may comprise: information representing positions from starts of the cells to corresponding specific positions.

The information representing the positions from the start of the cell to the corresponding specific positions may comprise: a part of title search pointer table which includes a value indicating a number of part of title search pointers, and each part of title search pointers including a cell number of one of the cells in a program chain; and a position relative from the start of the cell to the corresponding specific position.

According to another aspect, there is provided a rewritable disk comprising: real-time audio and/or video data; and part of title information based upon the real-time audio and/or video data.

The rewritable disk preferably comprises: audio and/or video data; a cell for logically dealing with the audio and/or video data; and information enabling random access to a specific position in the cell.

The information may represent a position from a start of the cell to the specific position.

Preferably, the position from the start of the cell to the specific position is defined as a reproduction time of the corresponding video data.

For a better understanding of the invention, and to show how embodiments of the same may be carried into effect, reference will now be made, by way of example, to the accompanying diagrammatic drawings, in which:
Figure 1 is a block diagram illustrating the relationship between a program chain (PGC), programs, cells, and video objects (VOBS) in a DVD ROM video;
Figures 2A and 2B are block diagrams illustrating the relationship between a title and a PGC in a DVD-ROM video;
Figure 3 is a detailed view of a part of title (PTT) search pointer table;
Figure 4 is a detailed view of a PTT search pointer;
Figure 5 is a block diagram of an optical disk recording/reproducing apparatus for providing PTT information, according to an embodiment of the present invention;
Figure 6 is a detailed view of a PTT search pointer according to embodiments of the present invention;
Figure 7 is a flowchart illustrating an optical disk recording method for recording PTT information.
Figure 8 is a flowchart illustrating an optical disk reproducing method for searching PTT information; and
Figure 9 is a flowchart illustrating an optical disk recording method for recording the positions of PTT.

The operation of an optical disk recording/ reproducing apparatus shown in Figure 5 will be described in a recording mode and a reproducing mode, as follows.

In the recording mode, an audio/video (AV) codec 502 compresses and encodes input external audio and video data in predetermined units according to a predetermined compression encoding system, and simultaneously provides information such as the size of audio and video data encoded by the predetermined units, or the time for reproduction. A digital signal processor (DSP) 504 adds additional data for error correction code (ECC) to the data encoded by the AV codec 502, modulates the resultant data, and outputs the result.

An RF amplifier 506 amplifies the data input from the DSP 504 and converts the amplified data into an optical signal. A pick-up unit 508 includes an actuator, and records the output optical signal of the RF amplifier 506 on a disk 509. A servo unit 510 receives information necessary for servo control from the DSP 504 via the RF amplifier 506 and a system controller 512, and performs a stable servo function for the pickup unit 508. The system controller 512 controls the whole system, generates logical information such as programs or cells with respect to data to be recorded, and receives start position information of PTT desired by a user, via a key input unit 514 or generates PTT information using an arbitrary method and controls the received or generated PTT information to be recorded on the disk 509 via the DSP 504, the RF amplifier 506, and the pick-up unit 508.

Meanwhile, in the reproducing mode, the pick-up unit 508 in the reproduction mode reads data stored on the disk 509 and outputs the read data as an optical signal. The RF amplifier 506 converts the optical signal output by the pick-up unit 508 to an electrical signal, extracts modulated data, and generates a servo signal for performing a stable servo function, using the electrical signal. The DSP 504 demodulates the modulated data of the RF amplifier 506, and removes additional data while correcting errors by performing ECC. The servo unit 510 performs a stable servo function using a servo signal generated by the RF amplifier 506. The AV codec 502 decodes audio and video data compressed and coded by the DSP 504. The system controller 512 controls the pick up unit 508, the RF amplifier 506, the DSP 504, and the AV controller 502 according to a command input by a user via the key input unit 514. Particularly, when a command "next/previous PTT" is input, the system controller 512 controls the pick up unit 508, the RF amplifier 506, the DSP 504, and the AV controller 502 to reproduce PTT, corresponding to the input command.

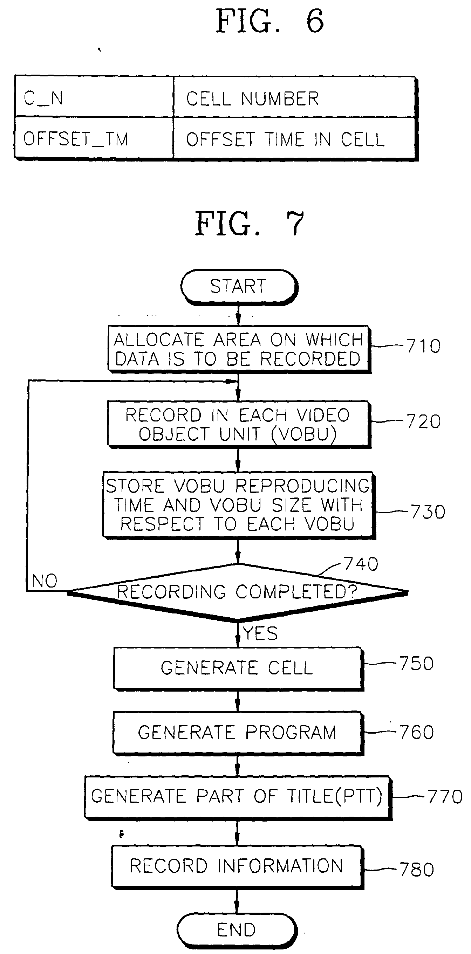

Figure 6 is a detailed view of a PTT search pointer according to the present invention. The PTT search pointer is represented in the PTT search pointer information as shown in Figure 3. The PTT search pointer is comprised of C_N representing a cell number in a program chain (PGC), and OFFSET_TM having reproduction time information from the start position of a cell to a specific position indicated by PTT. Here, the reproduction time information is represented in the form of a hour/minute/second frame on the basis of video data. Thus, PTT is a structure which can designate a specific area in a cell which belongs to the PGC. This is because the configurations of cells and programs in a general optical disk recording/reproducing apparatus are not consistent with the contents of recorded data, and because the configuration of the cells may be too long in some cases.

Accordingly, while the PTT is reproduced, the PTT is randomly accessed within specific units such as the cells and programs used in the data structure for reproduction and recording.

A method of recording PTT information on an optical disk under the control of the system controller 512 of Figure 5 will now be described referring to Figure 7.

In step 710, a physical area on a disk, on which data is to be recorded, is previously allocated to use an area unoccupied by data.

In step 720, input external audio and video data is recorded in video object units (VOBU) constituting a video object (VOB).

In step 730, information such as the size of each of the recorded VOBU and the time for reproducing the VOBU is stored in a special memory.

In step 740, it is determined whether recording is completed.

When all recording is completed, a cell is formed with a part of audio and video data using the information such as the size and the reproducing time of the VOBU stored in the special memory, in step 750. A program is generated with one or more cells in step 760, and a PTT is generated with a specific portion of the audio and video data in step 770.

As a consequence, the cell, the program, and the PTT information are recorded on a disk in step 780.

The program, the cell and the PTT information can be constituted by being individually received from a user, but generally they are arbitrarily constituted in a disk recording apparatus to avoid inconvenience to users and to save time. The cell can be formed in various cases. For example, the cell can be comprised of the start and end of a recording command input by a user via the key input unit 514 of Figure 5. The program also can be constituted in various cases. For example, the program can be comprised of cells recorded on the same date. The PTT information includes the contents of Figures 3 and 6, and can be configured at intervals of a predetermined reproducing time in consideration of the time for reproducing the configured cells.

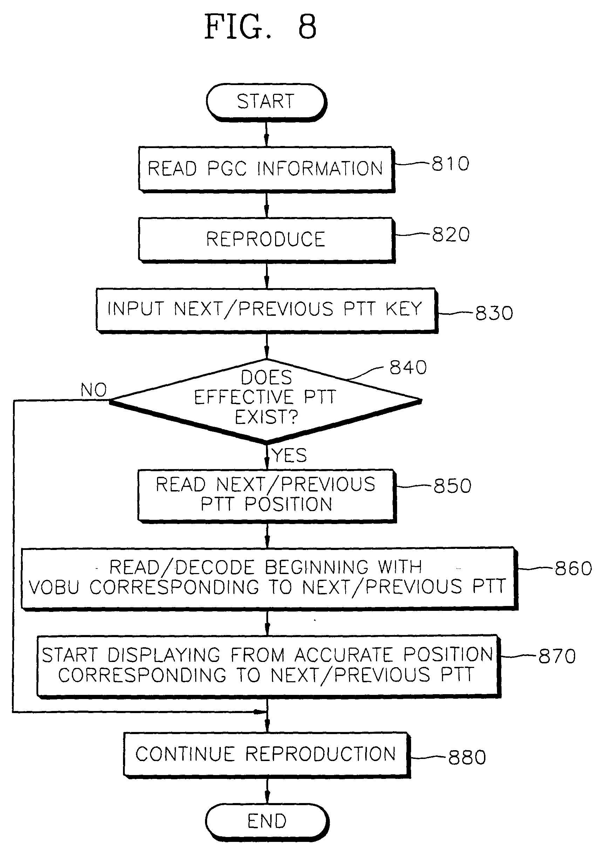

A PTT searching process performed by the system controller 512 of Figure 5 during reproduction of an optical disk will now be described referring to Figure 8.

First, the system controller 512 reads PGC information from a memory (not shown) to receive a user command from a user interface and start reproduction, in step 810. An optical disk is reproduced using the PGC information in step 820.

When a "next/previous PTT" command key is input by a user during reproduction of the optical disk in step 830, existence of effective PTT information is checked in step 840. This is because while the last or first PTT in a current PGC is being reproduced, PTT information corresponding to the next/previous PTT command cannot be dealt with.

If there exists effective PTT, the next/previous PTT position information as shown in Figure 6 is read, in step 850. In step 860, a VOBU, being the minimum unit in recording, corresponding to the next/previous PTT is read and decoded first.

Here, the position of the next/previous PTT is not generally consistent with the position of the VOBU. Accordingly, when the position of the VOBU becomes a accurately desired PTT position, the decoded data is displayed on a screen, in step 870. Reproduction continues in step 880.

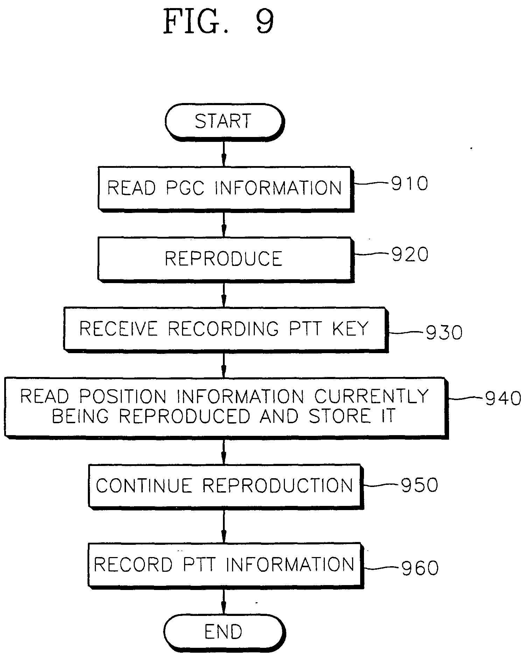

A PTT position recording method by the system controller 512 of Figure 5 will now be described referring to Figure 9.

First, when reproduction through a user interface with a user starts, the system controller 512 reads PGC information from a memory (not shown), in step 910. Then, an optical disk is reproduced using the PGC information in step 920.

When a user inputs a recording PTT key during reproduction in step 930, a position, currently being reproduced at the point of time when the key is input, is understood as the cell number in the PGC and the offset reproducing time information in the cell as shown in Figure 6, referring to the PGC information, and stored in a separate memory (not shown), in step 940. Reproduction continues in step 950. After the reproduction is completed, stored PTT information is recorded on the optical disk, in step 960.

According to embodiments of the present invention, audio and video data can be recorded/reproduced on/from a rewritable optical disk in real time by providing PTT information that is consistent with recorded data contents. Also, a user can randomly access a PTT within specific units for reproduction and recording.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A disk recording medium, comprising:
a cell including data, the cell being set as a reproduction and recording unit; and
information representing a position from a start of the cell to a specific position.

2. The disk recording medium as recited in claim 1, further comprising a plurality of cells including data, the plurality of cells being set as reproduction and recording units, wherein the information represents a position from a start of the respective cells to the specific position.

3. The disk recording medium as claimed in claim 1, wherein the reproduction and recording unit is randomly accessible.

4. The disk recording medium as claimed in claim 1, wherein the position from the start of the cell to the specific position is defined as a reproduction time.

5. The disk recording medium as claimed in claim 4, wherein the reproduction time is indicated in a form of hour/minute/second frame based on video data.

6. The disk recording medium as claimed in claim 1, wherein the information representing the position from the start of the cell to the specific position comprises:
a part of title search pointer table which includes
a value indicating a number of part of title search pointers, and
each part of title search pointer including
a cell number of the cell in a program chain; and
a position relative from the start of the cell to the specific position.

7. A recording medium, comprising:
audio and/or video data;
a cell for logically dealing with the audio and/or video data; and
part of title information indicating a specific area in the cell.

8. The recording medium as claimed in claim 7, further comprising:
a program chain comprising a program, wherein the program comprises the cell.

9. The recording medium as claimed in claim 8, wherein the cell comprises a start and an end of a recording command input by a user.

10. The recording medium as claimed in claim 7, further comprising:
a program chain comprising at least one program, wherein each program comprises a plurality of cells including the cell.

11. The recording medium as claimed in claim 10, wherein:
each cell comprises a start and an end of corresponding recording command inputs by a user.

12. The recording medium as claimed in claim 11, wherein each program comprises ones of the cells recorded on a same date.

13. The recording medium as claimed in claim 7, wherein the part of title information comprises:
information representing a position from a start of the cell to a specific position.

14. The recording medium as claimed in claim 13, wherein the information representing the position from the start of the cell to the specific position comprises:
a part of title search pointer including
a cell number of the cell in a program chain; and
a position relative from the start of the cell to the specific position.

15. The recording medium as claimed in claim 10, wherein the part of title information comprises:
information representing positions from starts of the cells to corresponding specific positions.

16. The recording medium as claimed in claim 15, wherein the information representing the positions from the start of the cell to the corresponding specific positions comprises:
a part of title search pointer table which includes
a value indicating a number of part of title search pointers, and
each part of title search pointers including
a cell number of one of the cells in a program chain; and
a position relative from the start of the cell to the corresponding specific position.

17. A rewritable disk comprising:
real-time audio and/or video data; and
part of title information based upon the real-time audio and/or video data.

18. A rewritable disk comprising:
audio and/or video data;
a cell for logically dealing with the audio and/or video data; and
information enabling random access to a specific position in the cell.

19. The rewritable disk as claimed in claim 18, wherein the information represents a position from a start of the cell to the specific position.

20. The rewritable disk as claimed in claim 19, wherein the position from the start of the cell to the specific position is defined as a reproduction time of the corresponding video data.
